# EUROPEAN PATENT APPLICATION

(11) **EP 4 333 131 A1**
(43) Date of publication of application: **06.03.2024**
(21) Application number: 23193981.0
(22) Date of filing: 29.08.2023
(51) Int. Cl.: H01M 4/66, H01M 10/36

(54) **AQUEOUS POTASSIUM ION BATTERY**

(30) Priority: 29.08.2022 JP 2022135973
(71) Applicant: TOYOTA JIDOSHA KABUSHIKI KAISHA, Toyota-shi, Aichi-ken, 471 8571 (JP)
(72) Inventor: SUYAMA, Hiroshi, Toyota-shi, 471-8571 (JP)
(74) Representative: D Young & Co LLP

(57) **Abstract**

Disclosed is a technology capable of inhibiting elution of Al from a current collector containing Al into an aqueous electrolyte solution when the current collector is used in an aqueous potassium ion battery. The aqueous potassium ion battery of the present disclosure includes a positive electrode, an aqueous electrolyte solution and a negative electrode. One or both of the positive electrode and the negative electrode has/have a current collector containing Al. The current collector is in contact with the aqueous electrolyte solution. The aqueous electrolyte solution contains water and potassium pyrophosphate dissolved in the water. The aqueous electrolyte solution has no freezing point at -60°C or higher.

## Description

### TECHNICAL FIELD

The present application discloses an aqueous potassium ion battery.

### BACKGROUND ART

PTL 1 discloses an aqueous electrolyte solution used in an aqueous potassium ion battery, which includes water and potassium pyrophosphate dissolved at a concentration of 2 mol or more per 1 kg of the water. When the aqueous potassium ion battery is formed using the aqueous electrolyte solution disclosed in PTL 1, decomposition of the aqueous electrolyte solution on the surface of a negative electrode is easily suppressed even when the aqueous potassium ion battery is charged and discharged because of wide potential window on the reduction side of the aqueous electrolyte solution. In PTL 1, a Ti foil and an Au foil are used as electrode current collectors when the aqueous electrolyte solution is evaluated.

### CITATION LIST

### PATENT LITERATURE

PTL 1: JP 2019-220294 A

### SUMMARY

### TECHNICAL PROBLEM

Conventional aqueous potassium ion batteries have room for improvement with respect to measures against corrosion of the current collector. For example, in aqueous potassium ion batteries, when a current collector containing Al is used, Al is easily eluted from the current collector into the aqueous electrolyte solution when the battery is charged and discharged. When a current collector containing Al is used in aqueous potassium ion batteries, new technology is required to suppress elution of Al from the current collector into the aqueous electrolyte solution.

### SOLUTION TO PROBLEM

The present application discloses, as aforementioned solution to problem, a plurality of aspects below.

### <Aspect 1>

An aqueous potassium ion battery including a positive electrode, an aqueous electrolyte solution and a negative electrode, wherein
one or both of the positive electrode and the negative electrode has/have a current collector containing Al,
the current collector is in contact with the aqueous electrolyte solution,
the aqueous electrolyte solution contains water and potassium pyrophosphate dissolved in the water, and
the aqueous electrolyte solution has no freezing point at -60°C or higher.

### <Aspect 2>

The aqueous potassium ion battery according to aspect 1, wherein
the aqueous electrolyte solution does not involve salt precipitation when cooling from 0°C to - 60°C.

### <Aspect 3>

The aqueous potassium ion battery according to aspect 1 or 2, wherein
at least the positive electrode has the current collector.

### <Aspect 4>

The aqueous potassium ion battery according to any one of aspects 1 to 3, wherein the aqueous electrolyte solution contains water and potassium pyrophosphate dissolved at a concentration of 4 mol or more and 7 mol or less per 1 kg of the water.

### <Aspect 5>

The aqueous potassium ion battery according to any one of aspects 1 to 4, wherein the aqueous electrolyte solution has a viscosity of 40 mPa·s or more and 350 mPa·s or less at 20°C.

### <Aspect 6>

The aqueous potassium ion battery according to any one of aspects 1 to 5, having a bipolar structure, wherein
a positive electrode active material layer is formed on one side of the current collector and a negative electrode active material layer is formed on the other side of the current collector.

### ADVANTAGEOUS EFFECTS OF INVENTION

According to the aqueous potassium ion battery of the present disclosure, it is easy to suppress elution of Al from a current collector into an aqueous electrolyte solution.

### BRIEF DESCRIPTION OF DRAWINGS

FIG. 1 schematically shows an example of a structure of an aqueous potassium ion battery.
FIG. 2 schematically shows an example of a structure of an aqueous potassium ion battery.
FIG. 3 shows a time-potential curve when a 0.5 m aqueous electrolyte solution is used in an electrochemical cell of Example and a constant current on the oxidation side is applied.
FIG. 4 shows a time-potential curve when a 5 m aqueous electrolyte solution is used in electrochemical cells of Examples and a constant current on the oxidation side is applied.
FIG. 5 shows a time-potential curve when a 1 m aqueous electrolyte solution is used in electrochemical cells of Examples and a constant current on the reduction side is applied.
FIG. 6 shows a time-potential curve when a 5 m aqueous electrolyte solution is used in electrochemical cells of Examples and a constant current on the reduction side is applied.
FIG. 7A shows a charge-discharge curve of a cell for evaluation when using an Al foil as a current collector.
FIG. 7B shows a charge-discharge curve of a cell for evaluation when using a Ni foil as a current collector.
FIG. 8A is a graph showing the relationship between the concentration and the crystallization peak temperature (freezing point) of an aqueous electrolyte solution.
FIG. 8B is a graph showing the relationship between the concentration and the crystallization peak intensity of an aqueous electrolyte solution.
FIG. 9 is a graph showing the relationship between the concentration and the glass transition temperature of an aqueous electrolyte solution.
FIG. 10 is a graph showing the relationship between the concentration and the viscosity of an aqueous electrolyte solution.

### DESCRIPTION OF EMBODIMENTS

### 1. Aqueous Potassium Ion Battery

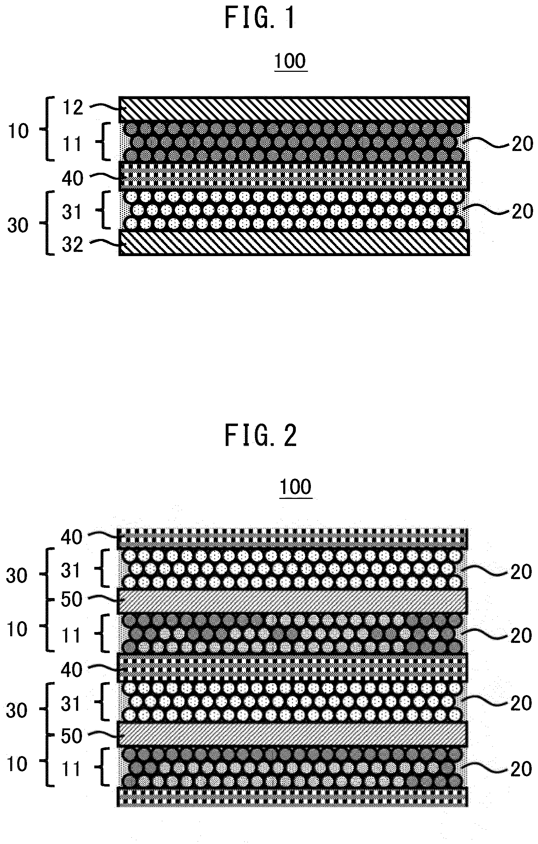

The potassium ion battery according to the embodiment will be described below with reference to the drawings, but the technology of the present disclosure is not limited to the following embodiments. FIG. 1 schematically shows an example of a structure of an aqueous potassium ion battery 100 according to the embodiment. As shown in FIG. 1, the aqueous potassium ion battery 100 includes a positive electrode 10, an aqueous electrolyte solution 20 and a negative electrode 30. One or both of the positive electrode 10 and the negative electrode 30 has/have a current collector containing Al. The current collector is in contact with the aqueous electrolyte solution 20. The aqueous electrolyte solution 20 contains water and potassium pyrophosphate dissolved in the water. The aqueous electrolyte solution 20 has no freezing point at -60°C or higher.

### 1.1 Positive Electrode

It is possible to use, as the positive electrode 10, any known positive electrode for an aqueous potassium ion battery. As shown in FIG. 1, the positive electrode 10 may include a positive electrode active material layer 11 and a positive electrode current collector 12.

### 1.1.1 Positive Electrode Active Material Layer

The positive electrode active material layer 11 contains a positive electrode active material. The positive electrode active material layer 11 is impregnated with the aqueous electrolyte solution 20. The positive electrode active material layer 11 may contain, in addition to the positive electrode active material, a conductive aid and/or a binder. The positive electrode active material layer 11 may also contain various other additives. The content of each component in the positive electrode active material layer 11 may be appropriately determined according to the objective battery performance. For example, the content of the positive electrode active material may be 40% by mass or more, 50% by mass or more, 60% by mass or more, or 70% or more, and may be 100% or less or 90% by mass or less, based on 100% by mass of the entire positive electrode active material layer 11 (total solid content). The shape of the positive electrode active material layer 11 is not particularly limited, and the positive electrode active material layer may be, for example, a sheet-shaped positive electrode active material layer having an approximately flat surface. The thickness of the positive electrode active material layer 11 is not particularly limited, and may be, for example, 0.1 µm or more, 1 µm or more, or 10 µm or more, and may be 2 mm or less, 1 mm or less, or 500 µm or less.

Any substance capable of functioning as the positive electrode active material of the aqueous potassium ion battery can be used as the positive electrode active material. The positive electrode active material has a higher charge-discharge potential than that of the below-mentioned negative electrode active material, and can be appropriately selected in consideration of the potential window of the below-mentioned aqueous electrolyte solution 20. For example, the positive electrode active material may contain a K element. Specific examples thereof include oxides and polyanions containing the K element. More specifically, the positive electrode active material may be a composite oxide of potassium and transition metal. Such composite oxide may be at least one selected from potassium cobalt composite oxide (KCoO₂, etc.), potassium nickel composite oxide (KNiO₂, etc.), potassium nickel titanium composite oxide (KNi_{1/2}Ti_{1/2}O₂, etc.), potassium nickel manganese composite oxide (KNi_{1/2}Mn_{1/2}O₂, KNi_{1/3}Mn_{2/3}O₂, etc.), potassium manganese composite oxide (KMnO₂, KMn₂O₄, etc.), potassium iron manganese composite oxide (K_{2/3}Fe_{1/3}Mn_{2/3}O₂, etc.), potassium nickel cobalt manganese composite oxide (KNi_{1/3}Co_{1/3}Mn_{1/3}O₂, etc.), potassium iron composite oxide (KFeO₂, etc.), potassium chromium composite oxide (KCrO₂, etc.), potassium iron phosphate compound (KFePO₄, etc.), potassium manganese phosphate compound (KMnPO₄, etc.) and potassium cobalt phosphate compound (KCoPO₄). Even if the K site in the composite oxide is composed of other alkali metal elements, there is a possibility that K ions can be deinserted by ion exchange or the like. Alternatively, the positive electrode active material may be an organic active material such as Prussian blue. Alternatively, the positive electrode active material may be at least one selected from potassium titanate, TiO₂ and sulfur (S) which show a noble charge-discharge potential compared to the below-mentioned negative electrode active material. The positive electrode active material may be those which insert and deinsert K by intercalation, or those which insert and deinsert K by a conversion reaction or an alloying reaction. Only one positive electrode active material may be used alone, or two or more thereof may be used in combination.

The shape of the positive electrode active material may be any shape capable of functioning as the positive electrode active material of the battery. For example, the positive electrode active material may be in the form of particles. The positive electrode active material may be a solid material, a hollow material, a material with voids, or a porous material. The positive electrode active material may be a primary particle, or a secondary particle obtained by agglomeration of a plurality of primary particles. The mean particle diameter D50 of the positive electrode active material may be, for example, 1 nm or more, 5 nm or more, or 10 nm or more, and may be 500 µm or less, 100 µm or less, 50 µm or less, or 30 µm or less. The mean particle diameter D50 in the present application is the particle diameter (median diameter) at 50% of the integrated value in the volume-based particle diameter distribution determined by the laser diffraction and scattering method.

Examples of the conductive aid which can be included in the positive electrode active material layer 11 include carbon materials such as vapor-phase-grown carbon fiber (VGCF), acetylene black (AB), Ketjen black (KB), carbon nanotube (CNT) and carbon nanofiber (CNF); and metal materials such as nickel, titanium, aluminum, stainless steel and the like which are slightly insoluble (poorly soluble) in an electrolyte solution. The conductive aid may be, for example, in the form of particles or fibers, and the size thereof is not particularly limited. Only one conductive aid may be used alone, or two or more thereof may be used in combination.

Examples of the binder which can be included in the positive electrode active material layer 11 include butadiene rubber (BR)-based binders, butylene rubber (IIR)-based binders, acrylate-butadiene rubber (ABR)-based binders, styrene-butadiene rubber (SBR)-based binders, polyvinylidene fluoride (PVdF)-based binders, polytetrafluoroethylene (PTFE)-based binders, polyimide (PI)-based binders and the like. Only one binder may be used alone, or two or more thereof may be used in combination.

### 1.1.2 Positive Electrode Current Collector

As shown in FIG. 1, the positive electrode 10 may include a positive electrode current collector 12 in contact with the positive electrode active material layer 11. The positive electrode current collector 12 is in contact with an aqueous electrolyte solution 20. It is possible to use, as the positive electrode current collector 12, any material capable of functioning as the positive electrode current collector of the aqueous potassium ion battery. When the below-mentioned negative electrode current collector 32 contains Al, the positive electrode current collector 12 may contain Al or may not contain Al. When the below-mentioned negative electrode current collector 32 does not contain Al, the positive electrode current collector 12 contains Al. As mentioned below, elution of Al from the current collector into the aqueous electrolyte solution particularly easily occurs on the positive electrode side which becomes the oxidation potential. According to the potassium ion battery 100 of the present disclosure, even if the positive electrode collector 12 contains Al, it is possible to suppress elution of Al from the positive electrode collector 12 into the aqueous electrolyte solution 20. Namely, in the potassium ion battery 100, at least the positive electrode 10 may have a current collector containing Al.

When the positive electrode current collector 12 contains Al, the entire positive electrode current collector 12 may be composed of Al, or at least a portion of the surface thereof may be composed of Al. For example, the positive electrode current collector 12 may be made of an Al foil, or the surface of a metal foil or some base material may be coated with Al. The positive electrode current collector 12 may be those in which Al is present on at least a portion of the surface in contact with the aqueous electrolyte solution 20, or Al may be present over the entire surface in contact with the aqueous electrolyte solution 20.

The positive electrode current collector 12 may be in the form of foil, plate, mesh, perforated metal and foam. The positive electrode current collector 12 may be formed of a metal foil or a metal mesh. In particular, the metal foil is excellent in ease of handling or the like. The positive electrode current collector 12 may be composed of a plurality of foils. The metal material constituting the positive electrode current collector 12 include those containing at least one element selected from the group consisting of Cu, Ni, Al, V, Au, Pt, Mg, Fe, Ti, Pb, Co, Cr, Zn, Ge, In, Sn and Zr. In particular, the positive electrode current collector 12 preferably contains Al, as mentioned above. The positive electrode current collector 12 may be those in which the above metal is plated or vapor-deposited on a metal foil or a base material. When the positive electrode current collector 12 is composed of a plurality of metal foils, the positive electrode current collector may have some layer between the plurality of metal foils. The thickness of the positive electrode current collector 12 is not particularly limited, and may be, for example, 0.1 µm or more, or 1 µm or more, and may be 1 mm or less, or 100 µm or less.

### 1.2 Aqueous Electrolyte Solution

The aqueous electrolyte solution 20 contains water and potassium pyrophosphate dissolved in the water. The aqueous electrolyte solution 20 may be in contact with the above-mentioned positive electrode collector 12 and may be contained in the above-mentioned positive electrode active material layer 11, and may be in contact with the below-mentioned negative electrode collector 32 and may be contained in the below-mentioned negative electrode active material layer 31, and the aqueous electrolyte solution may be held by the separator 40 between the positive electrode 10 and the negative electrode 30.

### 1.2.1 Solvent

The aqueous electrolyte solution 20 contains water as a solvent. The solvent contains water as a main component. Namely, water accounts for 50 mol% or more and 100 mol% or less of the total amount of solvent constituting the aqueous electrolyte solution (100 mol%). Water may account for 70 mol% or more, 90 mol% or more, or 95 mol% or more of the total amount of the solvent. Meanwhile, the upper limit of the proportion of water in the solvent is not particularly limited. The solvent may be composed only of water (100 mol% water).

The solvent may contain, in addition to water, solvents other than water as long as the above problems can be solved, for example, from the viewpoint of forming solid electrolyte interphase (SEI) on the surface of the active material. Examples of solvents other than water include one or more organic solvents selected from ethers, carbonates, nitriles, alcohols, ketones, amines, amides, sulfur compounds and hydrocarbons. The solvents other than water may account for 50 mol% or less, 30 mol% or less, 10 mol% or less, or 5 mol% or less of the total amount of solvents constituting the electrolyte solution (100 mol%).

### 1.2.2 Electrolyte

An electrolyte is dissolved in the aqueous electrolyte solution 20, and the electrolyte may dissociate into cations and anions in the aqueous electrolyte solution 20. In the aqueous electrolyte solution 20, cations and anions may form aggregates (associations) in close proximity to each other.

### 1.2.2.1 Potassium Pyrophosphate

The aqueous electrolyte solution 20 contains potassium pyrophosphate dissolved in the water as an electrolyte. In the aqueous electrolyte solution 20, "potassium pyrophosphate dissolved in water" may be present as ions such as K⁺, P₂O₇⁴⁻; KP₂O₇³⁻, K₂P₂O₇²⁻ and K₃P₂O₇⁻, or aggregates (associations) of these ions. In the aqueous electrolyte solution 20, "concentration of potassium pyrophosphate dissolved in water" is specified by converting ions, aggregates (associations), etc. contained in aqueous electrolyte solution 20 into potassium pyrophosphate.

In the aqueous potassium ion battery 100 of the present disclosure, the components and concentration in the aqueous electrolyte solution 20 are determined so that "aqueous electrolyte solution 20 does not have a freezing point at -60°C or higher". According to the inventors' new knowledge, in order to achieve the conditions that "aqueous electrolyte solution 20 does not have a freezing point at -60°C or higher", the concentration of potassium pyrophosphate in the aqueous electrolyte solution 20 should be higher than ever before. According to the inventors' new knowledge, when the freezing point is adjusted by dissolving only potassium pyrophosphate in water in the aqueous electrolyte solution, the freezing point of the aqueous electrolyte solution decreases as the concentration of potassium pyrophosphate in water increases, and when the concentration of potassium pyrophosphate in the aqueous electrolyte solution exceeds a certain level, the freezing point substantially disappears. Namely, when the concentration of potassium pyrophosphate in the aqueous electrolyte solution is a certain level or more, the aqueous electrolyte solution does not have a freezing point at -60°C or higher. For example, when the aqueous electrolyte solution 20 contains the water and potassium pyrophosphate dissolved at a concentration of 4 mol or more per 1 kg of the water, the freezing point of the aqueous electrolyte solution 20 disappears and thus the aqueous electrolyte solution 20 does not have a freezing point at -60°C or higher. However, when other components are dissolved in the aqueous electrolyte solution 20 together with potassium pyrophosphate in water, the minimum concentration of potassium pyrophosphate at which the freezing point of the aqueous electrolyte solution disappears may be less than 4 mol. In this respect, the concentration of potassium pyrophosphate per 1 kg of water in the aqueous electrolyte solution 20 may be, for example, 2.5 mol or more, 3.0 mol or more, 3.5 mol or more, or 4.0 mol or more.

As mentioned above, in order to achieve the conditions that "aqueous electrolyte solution 20 does not have a freezing point at -60°C or higher", it is effective to adjust the concentration of potassium pyrophosphate in the aqueous electrolyte solution 20 to a higher concentration than ever before, and specifically, the conditions are easily satisfied when the aqueous electrolyte solution 20 contains the water and potassium pyrophosphate dissolved at a concentration of 4 mol or more per 1 kg of the water. The upper limit of the concentration of potassium pyrophosphate in the aqueous electrolyte solution 20 is not particularly limited, and if the concentration is excessively high, the viscosity of the aqueous electrolyte solution 20 may increase excessively and the ionic conductivity or the like of the aqueous electrolyte solution 20 may deteriorate. In consideration of achieving the conditions that "aqueous electrolyte solution 20 does not have a freezing point at -60°C or higher" and of keeping the viscosity of the aqueous electrolyte solution 20 within an appropriate range, the aqueous electrolyte solution 20 may contain the water and potassium pyrophosphate dissolved at a concentration of 4 mol or more and 7 mol or less per 1 kg of the water. The concentration may be 6 mol or less.

The aqueous electrolyte solution 20 may contain potassium ions as cations. In the aqueous electrolyte solution 20, it is not necessary for the entire potassium ions contained in the aqueous electrolyte solution 20 to be converted as "dissolved potassium pyrophosphate". Namely, the aqueous electrolyte solution 20 may contain more potassium ions than the concentration which can be converted as potassium pyrophosphate. For example, if potassium ion sources other than K₄P₂O₇ (for example, KOH, CH₃COOK, K₃PO₄, K₅P₃O₁₀, K₆P₄O₁₃, K₇P₅O₁₆, (KPO₃)n, etc.) are added and dissolved in water together with K₄P₂O₇ when producing the aqueous electrolyte solution 20, the aqueous electrolyte solution 20 will contain more potassium ions than the concentration which can be converted as potassium pyrophosphate. The aqueous electrolyte solution 20 may contain other cations as long as the above problems can be solved. For example, alkali metal ions other than potassium ions, alkaline earth metal ions, transition metal ions and the like may be contained.

The aqueous electrolyte solution 20 may contain pyrophosphate ions (it may be P₂O₇⁴⁻ and it may be present in a state of being linked to cations as mentioned above, such as KP₂O₇³⁻, K₂P₂O₇²⁻; K₃P₂O₇⁻, etc.) as anions. In the aqueous electrolyte solution 20, it is not necessary for the entire pyrophosphate ions contained in the aqueous electrolyte solution 20 to be converted as "dissolved potassium pyrophosphate". Namely, the aqueous electrolyte solution 20 may contain more pyrophosphate ions than the concentration which can be converted as potassium pyrophosphate. For example, if pyrophosphate ion sources other than K₄P₂O₇ (for example, H₄P₂O₇, etc.) are added and dissolved in water together with K₄P₂O₇ when producing an aqueous electrolyte solution 20, the aqueous electrolyte solution 20 will contain more pyrophosphate ions than the concentration which can be converted as potassium pyrophosphate. The aqueous electrolyte solution 20 may contain other anions as long as the above problems can be solved. For example, anions derived from other electrolytes mentioned below may be contained.

### 1.2.2.2 Other Components containable in Aqueous Electrolyte Solution

The aqueous electrolyte solution 20 may contain other electrolytes. For example, the aqueous electrolyte solution may contain at least one selected from KPF₆, KBF₄, K₂SO₄, KNO₃, CH₃COOK, (CF₃SO₂)₂NK, KCF₃SO₃, (FSO₂)₂NK, K₂HPO₄, KH₂PO₄, KPO₃, K₅P₃O₁₀, K₆P₄O₁₃, K₇P₅O₁₆, (KPO₃)n and the like. Other electrolytes may account for 50 mol% or less, 30 mol% or less, or 10 mol% or less of the total amount of electrolytes dissolved in the electrolyte solution (100 mol%).

The aqueous electrolyte solution 20 may contain, in addition to the above-mentioned electrolytes, an acid, a hydroxide and the like to adjust the pH of the aqueous electrolyte solution 20. Various additives may be contained.

### 1.2.3 Freezing Point

As mentioned above, the aqueous electrolyte solution 20 does not have a freezing point at -60°C or higher. Here, the presence or absence of "freezing point" of the aqueous electrolyte solution 20 is confirmed by differential scanning calorimetry (DSC). Note that the DSC sweep rate is set at 5°C/min for both descending temperature and ascending temperature, and the sweep range is set as follows: temperature descending to -120°C from room temperature, followed by temperature ascending to 40°C. The atmosphere in DSC is an atmosphere of inert gas such as Ar, and the pressure is equal to the atmospheric pressure. However, since a sealed aluminum container is used for the evaluation, the atmosphere inside the container is the sealed atmosphere under atmospheric pressure. If the crystallization peak temperature (freezing point temperature) is not confirmed at -60°C or higher when the aqueous electrolyte solution is measured under the above conditions, the aqueous electrolyte solution is considered to have "no freezing point at - 60°C or higher". The aqueous electrolyte solution 20 may have no freezing point at -80°C or higher, no freezing point at -100°C or higher, or no freezing point at -120°C or higher. In the aqueous potassium ion battery 100 of the present disclosure, in order to achieve the conditions that "aqueous electrolyte solution 20 does not have a freezing point at -60°C or higher", it is effective to make the pyrophosphoric acid concentration in the aqueous electrolyte solution 20 higher (for example, high concentration of 4 mol or more per 1 kg of water), as mentioned above. When the aqueous electrolyte solution 20 does not have a freezing point at -60°C, it becomes difficult for Al contained in the current collector to elute into the aqueous electrolyte solution 20, as mentioned below. When the aqueous electrolyte solution 20 does not have a freezing point at -60°C, it is also possible to use the aqueous potassium ion battery 100 even at extremely low temperature. Namely, the aqueous potassium ion battery 100 of the present disclosure operates properly even in cold district.

### 1.2.4 Other Properties

As long as the aqueous electrolyte solution 20 contains the solvents and electrolytes mentioned above and meets the requirements for the freezing point mentioned above, there is no particular limitation on other properties. An example of other properties of the aqueous electrolyte solution 20 will be described below.

### 1.2.4.1 Presence or Absence of Precipitation of Salt

It is preferable that the aqueous electrolyte solution 20 does not involve salt precipitation when cooling from 0°C to -60°C. Thus, when the aqueous electrolyte solution 20 does not involve salt precipitation due to temperature change, it becomes possible to perform stable ionic conduction even at low temperature. For example, the aqueous potassium ion battery 100 can be used even at extremely low temperature in cold district. The aqueous electrolyte solution 20 includes water and potassium pyrophosphate dissolved in the water, as mentioned above. According to the inventors' new knowledge, the saturation solubility of potassium pyrophosphate in water has low temperature dependence and scarcely changes at low temperature of 0°C or lower. In this respect, even if potassium pyrophosphate is dissolved in the aqueous electrolyte solution 20 at 0°C at high concentration (for example, high concentration of 4 mol or more per 1 kg of water) and the aqueous electrolyte solution 20 is cooled from 0°C to -60°C, precipitation of potassium pyrophosphate does not substantially occur in the aqueous electrolyte solution 20.

### 1.2.4.2 Viscosity

If the viscosity of the aqueous electrolyte solution 20 is too high, the ionic conductivity of aqueous electrolyte solution 20 may deteriorate. Meanwhile, if potassium pyrophosphate is dissolved at high concentration in the aqueous electrolyte solution 20, the aqueous electrolyte solution 20 may have a certain level of the viscosity. From the above point of view, the aqueous electrolyte solution 20 may have a viscosity of 40 mPa·s or more and 350 mPa·s or less at 20°C. The viscosity may be 300 mPa·s or less, 250 mPa·s or less, or 200 mPa·s or less.

### 1.2.4.3 pH

The pH of the aqueous electrolyte solution 20 is not particularly limited. However, if the pH is too high, the potential window on the oxidation side of the aqueous electrolyte solution may be narrow. In this respect, the pH of the aqueous electrolyte solution may be 4 or more and 13 or less. The pH may be 5 or more, 6 or more, or 7 or more, and may be 12 or less.

### 1.3 Negative Electrode

It is possible to use, as the negative electrode 30, any known negative electrode for an aqueous potassium ion battery. As shown in FIG. 1, the negative electrode 30 may include a negative electrode active material layer 31 and a negative electrode current collector 32.

### 1.3.1 Negative Electrode Active Material Layer

The negative electrode active material layer 31 contains a negative electrode active material. The negative electrode active material layer 31 is impregnated with the aqueous electrolyte solution 20. The negative electrode active material layer 31 may contain, in addition to the negative electrode active material, a conductive aid and/or a binder. The negative electrode active material layer 31 may also contain various other additives. The content of each component in the negative electrode active material layer 31 may be appropriately determined according to the objective battery performance. For example, the content of the negative electrode active material may be 40% by mass or more, 50% by mass or more, 60% by mass or more, or 70% or more, and may be 100% or less, or 90% by mass or less, based on 100% by mass of the entire negative electrode active material layer 31 (entire solid content). The shape of the negative electrode active material layer 31 is not particularly limited, and may be, for example, a sheet-shaped negative electrode active material layer having an approximately flat surface. The thickness of the negative electrode active material layer 31 is not particularly limited, and may be, for example, 0.1 µm or more, 1 µm or more, or 10 µm or more, and may be 2 mm or less, 1 mm or less, or 500 µm or less.

It is possible to use, as the negative electrode active material, any substance capable of functioning as the negative electrode active material of the aqueous potassium ion battery. The negative electrode active material has a lower charge-discharge potential than that of the above-mentioned positive electrode active material, and can be appropriately selected in consideration of the potential window of the above-mentioned aqueous electrolyte solution 20. For example, the negative electrode active material is potassium-transition metal composite oxide; titanium oxide; metal sulfides such as Mo₆S₈; elemental sulfur; KTi₂(PO₄)₃; NASICON-type compounds, and the like. The negative electrode active material may be those which insert and deinsert K by intercalation, or which insert and deinsert K by a conversion reaction or an alloying reaction. Only one negative electrode active material may be used alone, or two or more thereof may be used in combination.

The shape of the negative electrode active material may be any shape capable of functioning as the negative electrode active material of the battery. For example, the negative electrode active material may be in the form of particles. The negative electrode active material may be a solid material, a hollow material, a material with voids, or a porous material. The negative electrode active material may be a primary particle, or a secondary particle obtained by agglomeration of a plurality of primary particles. The mean particle diameter D50 of the negative electrode active material may be, for example, 1 nm or more, 5 nm or more, or 10 nm or more, and may be 500 µm or less, 100 µm or less, 50 µm or less, or 30 µm or less.

Examples of the conductive aid which can be contained in the negative electrode active material layer 31 include carbon materials such as vapor-phase-grown carbon fiber (VGCF), acetylene black (AB), Ketjen black (KB), carbon nanotube (CNT) and carbon nanofiber (CNF); and metal materials such as nickel, titanium, aluminum, stainless steel and the like which are slightly insoluble (poorly soluble) in an electrolyte solution. The conductive aid may be, for example, in the form of particles or fibers, and the size thereof is not particularly limited. Only one conductive aid may be used alone, or two or more thereof may be used in combination.

Examples of the binder which can be contained in the negative electrode active material layer 31 include butadiene rubber (BR)-based binders, butylene rubber (IIR)-based binders, acrylate-butadiene rubber (ABR)-based binders, styrene-butadiene rubber (SBR)-based binders, polyvinylidene fluoride (PVdF)-based binders, polytetrafluoroethylene (PTFE)-based binders, polyimide (PI)-based binders and the like. Only one binder may be used alone, or two or more thereof may be used in combination.

### 1.3.2 Negative Electrode Current Collector

As shown in FIG. 1, the negative electrode 30 may include a negative electrode current collector 32 in contact with the negative electrode active material layer 31. The negative electrode current collector 32 is in contact with an aqueous electrolyte solution 20. It is possible to use, as the negative electrode current collector 32, any material capable of functioning as the negative electrode current collector of the aqueous potassium ion battery. When the above-mentioned positive electrode current collector 12 contains Al, the negative electrode current collector 32 may contain Al or may not contain Al. When the above-mentioned positive electrode current collector 12 does not contain Al, the negative electrode current collector 32 contains Al.

When the negative electrode current collector 32 contains Al, the entire negative electrode current collector 32 may be composed of Al, or at least a portion of the surface thereof may be composed of Al. For example, the negative electrode current collector 32 may be made of an Al foil, or the surface of a metal foil or some base material may be coated with Al. The negative electrode current collector 32 may be those in which Al is present on at least a portion of the surface in contact with the aqueous electrolyte solution 20, or Al may be present over the entire surface in contact with the aqueous electrolyte solution 20.

The negative electrode current collector 32 may be in the form of foil, plate, mesh, perforated metal and foam. The negative electrode current collector 32 may be formed of a metal foil or a metal mesh. In particular, the metal foil is excellent in ease of handling or the like. The negative electrode current collector 32 may be composed of a plurality of foils. The metal material constituting the negative electrode current collector 32 include those containing at least one element selected from the group consisting of Cu, Ni, Al, V, Au, Pt, Mg, Fe, Ti, Pb, Co, Cr, Zn, Ge, In, Sn and Zr. In particular, the negative electrode current collector 32 may contain at least one selected from the group consisting of Al, Ti, Pb, Zn, Sn, Mg, Zr, and In, and may contain Al as mentioned above. All of Al, Ti, Pb, Zn, Sn, Mg, Zr and In have low work function, and even if the negative electrode current collector 32 comes into contact with the aqueous electrolyte solution 20 on the reduction potential, it is considered to be difficult for the aqueous electrolyte solution 20 to undergo electrolysis. The negative electrode current collector 32 may be those in which the above metal is plated or vapor-deposited on a metal foil or a base material. When the negative electrode current collector 32 is composed of a plurality of metal foils, the negative electrode current collector may have some layer between the plurality of metal foils. The thickness of the negative electrode current collector 32 is not particularly limited, and may be, for example, 0.1 µm or more, or 1 µm or more, and may be 1 mm or less, or 100 µm or less.

### 1.4 Other Structures

The aqueous potassium ion battery 100 may have, in addition to the above-mentioned basic structure, the following other structures.

### 1.4.1 Separator

As mentioned above, in the aqueous potassium ion battery 100, a separator 40 may be present between the positive electrode 10 and the negative electrode 30. The separator 40, which may be used, is a separator used in a conventional aqueous electrolyte solution battery (nickel-metal hydride battery, zinc air battery, etc.). For example, the separator is a separator having the hydrophilicity, such as non-woven fabrics made of a cellulose material. The thickness of the separator 40 is not particularly limited, and may be, for example, 5 µm or more and 1 mm or less.

### 1.4.2 Bipolar Structure

As mentioned above, in the aqueous potassium ion battery 100, both the positive electrode current collector 12 and the negative electrode current collector 32 may contain Al. In this respect, in the aqueous potassium ion battery 100, a current collector containing Al may be used as a bipolar current collector which serves as both the positive electrode current collector 12 and the negative electrode current collector 32. Namely, the positive electrode 10 and the negative electrode 30 may share one current collector. FIG. 2 shows an example of a bipolar structure. As shown in FIG. 2, the aqueous potassium ion battery 100 may have a bipolar structure, and a positive electrode active material layer 11 may be formed on one side of an Al-containing current collector 50 (bipolar current collector which functions as both the positive electrode collector 12 and negative electrode collector 32) and a negative electrode active material layer 31 may be formed on the other side of the current collector 50. In this case, the Al-containing current collector 50 may not have liquid permeability, that is, the aqueous electrolyte solution 20 may not permeate from the positive electrode active material layer 11 to the negative electrode active material layer 31 via the current collector 50 and vice versa.

### 1.4.3 Terminal or the like

The aqueous potassium ion battery 100 may include, in addition to the above structure, a terminal, a battery case and the like. Other structures are obvious to those skilled in the art who refer to the present application, and are therefore explanation will be omitted here.

### 1.5 Method for Producing Aqueous Potassium Ion Battery

The aqueous potassium ion battery 100 of the present disclosure can be produced, for example, as follows.

### 1.5.1 Method for Producing Aqueous Electrolyte Solution

The aqueous electrolyte solution 20 can be produced, for example, by mixing water with K₄P₂O₇.

Alternatively, the aqueous electrolyte solution can also be produced by mixing water with a potassium ion source and a pyrophosphate ion source. The mixing method is not particularly limited, and any known mixing method can be used. By simply filling a container with water and potassium pyrophosphate, followed by standing, they are mixed with each other to finally obtain an aqueous electrolyte solution 20.

### 1.5.2 Production of Positive Electrode

The positive electrode 10 is produced, for example, as follows. A positive electrode active material and etc. constituting the positive electrode active material layer 11 is dispersed in a solvent to obtain a positive electrode mixture paste (slurry). The solvent used in this case is not particularly limited, and water and various organic solvents can be used. Using a doctor blade or the like, the positive electrode mixture paste (slurry) is applied on the surface of the positive electrode current collector 12, and then dried to form a positive electrode active material layer 11 on the surface of the positive electrode current collector 12, thus obtaining a positive electrode 10. It is possible to use, as the coating method, an electrostatic coating method, a dip coating method, a spray coating method and the like, including a doctor blade method.

### 1.5.3 Production of Negative Electrode

The negative electrode 30 is produced, for example, as follows. A negative electrode active material and etc. constituting the negative electrode active material layer 31 are dispersed in a solvent to obtain an negative electrode mixture paste (slurry). The solvent used in this case is not particularly limited, and water and various organic solvents can be used. Using a doctor blade or the like, the negative electrode mixture paste (slurry) is applied on the surface of the negative electrode current collector 32, and then dried to form a negative electrode active material layer 31 on the surface of the negative electrode current collector 32, thus obtaining a negative electrode 30. It is possible to use, as the coating method, an electrostatic coating method, a dip coating method, a spray coating method and the like, including a doctor blade method.

### 1.5.4 Housing or the like in Battery Case

The aqueous electrolyte solution 20, the positive electrode 10 and the negative electrode 30 are housed in a battery case to obtain an aqueous potassium ion battery 100. For example, a separator 40 is sandwiched between the positive electrode 10 and negative electrode 30 to obtain a laminate including the positive electrode collector 12, the positive electrode active material layer 11, the separator 40, the negative electrode active material layer 31 and the negative electrode collector 32 in this order. Other members such as terminal are attached to the laminate as necessary. The laminate is housed in a battery case and the battery case is filled with the aqueous electrolyte solution 20, and the laminate and the electrolyte solution are sealed in the battery case so that the laminate is immersed in the aqueous electrolyte solution 20 to obtain an aqueous potassium ion battery 100.

### 1.6 Function and Effect in Aqueous Potassium Ion Battery

According to the aqueous potassium ion battery 100 of the present disclosure, it is possible to suppress elution of Al from the electrode collector into the aqueous electrolyte solution 20 by the following function and effect.

### 1.6.1 Function and Effect when Al is contained in Positive Electrode Current Collector

During charging and discharging of the battery, the potential of the positive electrode becomes the potential on the oxidation side. Therefore, Al contained in the positive electrode current collector emits electrons, leading to an easily dissolvable state. Specifically, Al contained in the positive electrode current collector dissolves into the aqueous electrolyte solution while coordinating with anions and water molecules contained in the aqueous electrolyte solution.

In the potassium ion battery 100 of the present disclosure, as mentioned above, the aqueous electrolyte solution 20 does not have a freezing point at -60°C or higher. Namely, in the aqueous electrolyte solution 20, H₂O molecules cannot form a network of crystallization with each other, leading to fewer freezable free H₂O molecules and fewer free hydroxide ions. Therefore, it is difficult for Al eluted from the current collector into the aqueous electrolyte solution 20 to diffuse through H₂O and OH⁻, and Al eluted into the aqueous electrolyte solution 20 tends to stay in the vicinity of the current collector. Meanwhile, as mentioned above, potassium pyrophosphate is dissolved in the aqueous electrolyte solution 20, that is, anions derived from potassium pyrophosphate such as pyrophosphate ions can be present in the aqueous electrolyte solution 20. Therefore, in the potassium ion battery 100 of the present disclosure, during charging and discharging of the battery, Al contained in the positive electrode current collector 12 is easily coordinated with anions derived from potassium pyrophosphate and eluted. Here, for example, aluminum pyrophosphate has extremely low solubility in the aqueous electrolyte solution 20. Therefore, Al coordinated with anions derived from potassium pyrophosphate is quickly precipitated as a solid. In other words, an insoluble or poor soluble Al compound is precipitated near the surface of the positive electrode collector 12, and the Al compound adheres to the surface of the positive electrode collector 12 to form a protective film (passive film) on the surface. As a result, in the potassium ion battery 100 of the present disclosure, it is possible to suppress elution of Al from the positive electrode collector 12 into the aqueous electrolyte solution 20 by the protective film.

### 1.6.2 Function and Effect when Al is contained in Negative Electrode Current Collector

During charging and discharging of the battery, the potential of the negative electrode becomes the potential on the reduction side. Therefore, electrolysis of the aqueous electrolyte solution in contact with the negative electrode causes generation of hydroxide ions, and the pH of the aqueous electrolyte solution in the vicinity of the negative electrode tends increase. When the pH of the aqueous electrolyte solution near the negative electrode increases, the solubility of Al in the aqueous electrolyte solution increases, and the Al contained in the negative electrode current collector is easily eluted into the aqueous electrolyte solution.

In contrast, in the potassium ion battery 100 of the present disclosure, as mentioned above, the aqueous electrolyte solution 20 does not have a freezing point at -60°C or higher. Namely, in the aqueous electrolyte solution 20, fewer freezable water is present, in other words, less electrolyzable water is present in the first place. Therefore, elution of Al contained in the negative electrode current collector 32 is difficult to progress. As mentioned above, potassium pyrophosphate is dissolved in the aqueous electrolyte solution 20, that is, anions derived from potassium pyrophosphate, such as pyrophosphate ions, can be present in the aqueous electrolyte solution 20. Therefore, in the potassium ion battery 100 of the present disclosure, even if Al contained in the negative electrode current collector 32 is eluted into the aqueous electrolyte solution 20 during charging and discharging of the battery, Al is quickly coordinated with anions derived from potassium pyrophosphate and deposited as a solid which is an Al compound. In other words, an insoluble or poor soluble Al compound is precipitated near the surface of the negative electrode collector 32, and the Al compound adheres to the surface of the negative electrode collector 32 to form a protective film (passive film) on the surface. As a result, in the potassium ion battery 100 of the present disclosure, it is possible to further suppress elution of Al from the negative electrode collector 32 into the aqueous electrolyte solution 20 by the protective film.

### 1.6.3 Other Effects

In the aqueous electrolyte solution batteries, those containing Ti and Ni are used as current collectors to prevent corrosion of the current collector (for example, PTL 1). It has been considered difficult to adopt metals other than these because they elute at, for example, positive electrode potential. However, since Ti and Ni are expensive, an alternative technology using inexpensive metals is needed for the widespread use of the aqueous electrolyte solution batteries. In this respect, in the aqueous potassium ion battery 100 of the present disclosure, those containing Al are used as current collectors to reduce the overall cost of the battery, while the above-mentioned aqueous electrolyte solution 20 is employed to suppress elution of Al from the current collector into the aqueous electrolyte solution.

### 2. Method for Suppressing Elution of Al from Current Collector of Aqueous Potassium Ion Battery into Aqueous Electrolyte Solution

The technology of the present disclosure also has an aspect as a method for suppressing elution of Al from the current collector of the aqueous potassium ion battery into the aqueous electrolyte solution. Namely, the method of the present disclosure is characterized by using a current collector containing Al and an aqueous electrolyte solution which satisfies the following requirements (1) and (2) in the aqueous potassium ion battery. Details of the aqueous electrolyte solution and details of the battery structure are as mentioned above.
(1) The aqueous electrolyte solution contains water and potassium pyrophosphate dissolved in the water.
(2) The aqueous electrolyte solution does not have a freezing point of -60°C or higher.

### 3. Vehicle having Aqueous Potassium Ion Battery

As mentioned above, according to the aqueous potassium ion battery of the present disclosure, it is possible to suppress elution of Al from the current collector into the aqueous electrolyte solution. Namely, deterioration of the battery is easily suppressed. Such aqueous potassium ion battery can be suitably used, for example, in at least one vehicle selected from hybrid electric vehicle (HEV), plug in hybrid electric vehicle (PHEV) and battery electric vehicle (BEV). Namely, the technology of the present disclosure also has an aspect as a vehicle having an aqueous potassium ion battery, the aqueous potassium ion battery including a positive electrode, an aqueous electrolyte solution and a negative electrode, wherein one or both of the positive electrode and the negative electrode has/have a current collector containing Al, the current collector is in contact with the aqueous electrolyte solution, the aqueous electrolyte solution contains water and potassium pyrophosphate dissolved in the water, and the aqueous electrolyte solution has no freezing point at -60°C or higher. Details of the aqueous electrolyte solution and details of the battery structure are as described above.

### EXAMPLES

Hereinafter, the technology of the present disclosure will be described in more detail by way of Examples, but the technology of the present disclosure is not limited to the following Examples.

### 1. Fabrication of Aqueous Electrolyte Solution

K₄P₂O₇ was dissolved in 1 kg of pure water at a predetermined concentration (0.5 to 5 mol) to obtain an aqueous electrolyte solution for evaluation.

### 2. Fabrication of Electrochemical Cell

In an electrochemical cell (VM4, manufactured by EC FRONTIER CO., LTD), an Al foil was used for a working electrode, Pt mesh was used for a counter electrode, Ag/AgCl was used for a reference electrode, and the above aqueous electrolyte solution was used as an electrolyte solution.

### 3. Evaluation Conditions

A constant current was applied to an electrochemical cell at 25°C for 30 minutes under the following conditions (1-1) or (1-2). A constant electric potential was applied to the electrochemical cell at 25°C for 30 minutes under the following conditions (2-1) or (2-2). Tests were carried out for each of current and potential on the oxidation side, and current and potential on the reduction side.

### (Oxidation Side)

(1-1) Constant current: 0.1→0.1→0.2→0.3→0.5 mA/cm², for 30 minutes each.

### (OCP for 30 minutes between evaluations)

(2-1) Constant voltage: 1.0→1.1→1.2→1.4→1.6 V (vs. Ag/AgCl), for 30 min each

### (OCP for 30 minutes between evaluations)

### (Reduction side)

(1-2) Constant current: -0.1→-0.1→-0.2→-0.3→-0.5 mA/cm², for 30 minutes each

### (OCP for 30 minutes between evaluations)

(2-2) Constant voltage: -1.3→-1.4→-1.5→-1.7→-1.9 V (vs. Ag/AgCl), for 30 min each

### (OCP of r30 min between evaluations)

### 4. Evaluation Results (In the case of Constant Current)

### 4.1 Aforementioned Condition 1-1, In the case of 0.5 m Electrolyte Solution

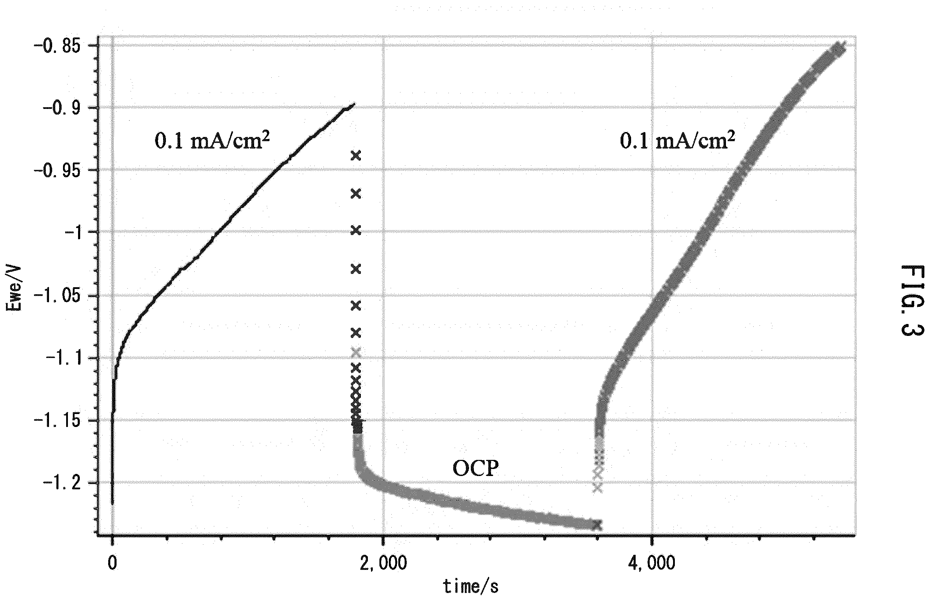

When an oxidation current was applied in an electrochemical cell using a 0.5 mol/kg K₄P₂O₇ aqueous electrolyte solution, an Al foil of an electrode (positive electrode) on the oxidation side disappeared and the electrolyte solution was transformed into a white gel. A potential-pH diagram shows that a standard electrode potential of Al in the aqueous electrolyte solution at pH 11 is about -2.3 V (vs. SHE), so that there is a possibility that Al is eluted (corroded) just by immersing the Al foil in the aqueous electrolyte solution, and it is considered that elution is accelerated by application of a small oxidation current. In fact, as a result of application of the oxidation current using the Al foil, the evaluation surface in contact with the electrolyte solution disappeared completely, which indicates that the protective layer of Al by its original oxide film did not function at all and elution progressed. Main cause of the white gel-like appearance of the electrolyte solution after the evaluation is that eluted Al ions interacted with P₂O₇ ions in the electrolyte solution to precipitate as Al₄(P₂O₇)₃. This suggested that when Al ions interact with P₂O₇ ions, a compound with very low solubility is produced and precipitated as a solid. FIG. 3 shows a time-potential curve when a 0.5 m aqueous electrolyte solution is used and a constant current on the oxidation side is applied.

### 4.2 Aforementioned Condition 1-1, In the case of 5 m Electrolyte Solution

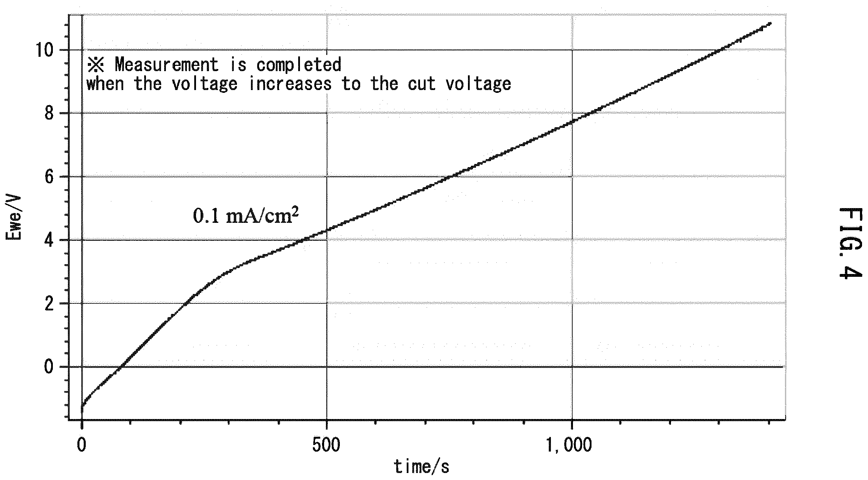

When an oxidation current was applied in an electrochemical cell using a 5 mol/kg K₄P₂O₇aqueous electrolyte solution, the potential continued to increase with time and reached the cut voltage of the device, causing the evaluation to be interrupted. It is considered that the overvoltage increased due to the passivation of the Al foil surface and gradual electrochemical insulation of the solid-liquid interface. Looking at the Al foil after evaluation, the evaluated surface retained its metallic luster and the aqueous electrolyte solution showed no change at all from the initial state, thus confirming that the state was very different from that in the case of the 0.5 m electrolyte solution. As mentioned above, it has been confirmed that when Al and P₂O₇ ions interact with each other, solid precipitates with very low solubility are generated. In this respect, in the dilute solution such as the above 0.5 m electrolyte solution, it is considered that the dissolved Al ions are once dissolved and diffused using H₂O and OH⁻ as ligands, and then gradually solidified by interacting with P₂O₇ ions, leading to precipitation of solids in the aqueous electrolyte solution. As a result, the solid are deposited and precipitated in the aqueous electrolyte solution, and elution of Al into the electrolyte solution have progressed. In contrast, in the case of the 5 m electrolyte solution, the concentration of P₂O₇ ions in the electrolyte solution was very high, and the discoloration of a pH test paper immersed in the electrolyte solution after the below-mentioned evaluation on the reduction side was also slow. Therefore, it is considered that the diffusion action via H₂O and OH⁻ is scarcely exerted, and Al ions eluted from the Al foil promptly interact with P₂O₇ ions before diffusing far away. Therefore, it is considered that the solid is precipitated near the surface of the Al foil, and the solid adheres to the surface of the Al foil to form an passive film (protective film) such as Al₄(P₂O₇)₃, leading to suppression of continuous elution of Al. FIG. 4 shows a time-potential curve when a 5 m aqueous electrolyte solution was used and a constant current on the oxidation side was applied.

### 4.3 Aforementioned Condition 1-2, In the case of 1 m Electrolyte Solution

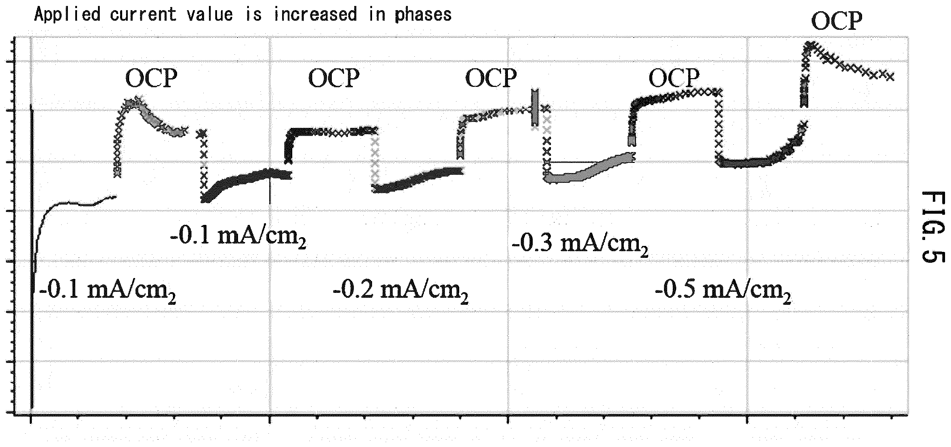

In an ordinary aqueous electrolyte solution, when a reducing current flows, hydrogen gas is generated and the pH of the electrolyte increases, as shown in the following formula. Therefore, when an Al foil made of amphoteric metal is used in the electrode (negative electrode) on the reduction side, as the electrolyte solution becomes a strong base with an increase in pH, Al is eluted from the Al foil into the electrolyte solution and thus the Al foil eventually disappears. In fact, when a reducing current was applied in an electrochemical cell using a 1 mol/kg K₄P₂O₇ aqueous electrolyte solution, the Al foil on the reducing electrode (negative electrode) disappeared and the electrolyte solution was transformed into a white gel-like state. This is considered to be due to elution of Al from the Al foil into the electrolyte solution and precipitation of Al₄(P₂O₇)₃ in the electrolyte solution, similar to the case where the oxidation current is applied in the 0.5 m electrolyte solution. FIG. 5 shows a time-potential curve when a 1 m aqueous electrolyte solution was used and a constant current on the reduction side was applied.

2H₂O + 2e⁻ → H₂ + 2OH⁻

### 4.4 Aforementioned Condition 1-2, In the case of 5 m Electrolyte Solution

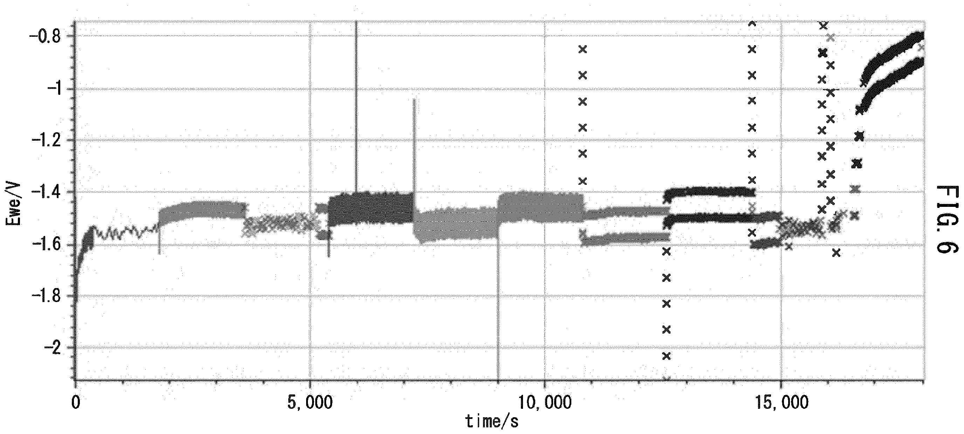

In the 5 mol/kg K₄P₂O₇ aqueous electrolyte solution, Al was not eluted after application of the electric current and retained its original shape, and no change was observed in the electrolyte solution. When a pH test paper was immersed in the electrolyte solution after evaluation, the color did not change immediately after immersion, but gradually changed to purple after a few minutes, indicating pH 14. This suggests that when the electrolyte of the aqueous electrolyte solution is mainly composed of K₄P₂O₇, the electrolyte solution differs from ordinary aqueous solutions in elementary properties, and the diffusion of H₂O and OH⁻ in the solution is very slow, and that Al foil is not eluted even in the presence of such a strong base because a passive film such as Al₄(P₂O₇)₃ was formed on the surface of the Al foil, similar to the evaluation results on the oxidation side mentioned above. FIG. 6 shows a time-potential curve when a 5 m aqueous electrolyte solution is used and a constant current is applied on the reduction side.

### 4.5 Supplementation

Comparing the presence or absence of elution of the Al foil in the K₄P₂O₇ aqueous electrolyte solution at each concentration, pitting due to elution of Al was not observed in the electrochemical cell using the aqueous electrolyte solution at a concentration of 4 mol/kg or more, where the overvoltage clearly increased on the oxidation side. For the reduction side, slight expansion of the potential (expansion of the potential window) was observed in response to an increase in concentration, but extreme increase in overvoltage did not occur as in the oxidizing side. For the reduction side, pitting due to elution of Al was observed in the electrolyte solution at a concentration of a 3 mol/kg or less, but not observed in the electrolyte solution at a concentration of a 4 mol/kg or more. On the oxidation side, the Al elution reaction occurred in a neutral to weakly basic solution of pH 11, whereas, on the reduction side, the Al elution reaction occurred after a local increase in pH after the hydrogen generation reaction, resulting in a reaction system with a different pH at the interface between the Al foil and the electrolytic solution. The passive film is considered to have higher solubility in the strong base region than in the neutral region, but if the passive film is dense, dissolution of the passive film is considered to be suppressed. In the electrolyte solution at a concentration of 4 mol/kg or more on both the oxidizing and reduction sides, it is also considered that a dense passive film is formed on the surface of the Al foil.

### 5. Evaluation Results (In the case of Constant Voltage)

### 5.1 In the case of Condition 2-1

In each electrochemical cell, when a constant voltage on the oxidation side was applied, the current increased linearly as the applied potential was increased in the electrochemical cell using a low-concentration aqueous electrolyte solution at a concentration of 3.0 mol/kg or less, whereas, in the electrochemical cell using a high-concentration aqueous electrolyte solution of 4.0 mol/kg or more, the current increased linearly as the applied voltage was increased. In the electrochemical cells with high-concentration aqueous electrolyte solution at a concentration of 4.0 mol/kg or more, the current saturated at 1.1 V (vs. Ag/AgCl). This indicates that the current changes in accordance with the normal Ohm's law on the low concentration side, whereas a resistive layer (the passive film mentioned above) is formed on the surface of the Al foil on the high concentration side.

### 5.2 In the case of Condition 2-2

In each electrochemical cell, when a constant voltage on the reduction side was applied, the current value increased as the applied potential became lower, but the limit of evaluation was - 1.7 V (vs. Ag/AgCl) in the electrochemical cell using an electrolyte solution at a concentration of less than 5 mol/kg. In the electrochemical cell using an electrolyte solution at a concentration of 5 mol/kg, the limit of evaluation was -1.9 V (vs. Ag/AgCl), however, despite the current value of 300 mA/cm², the surface of the Al foil was only slightly discolored, and no pitting or alteration due to corrosion could be observed. Unlike the oxidation side, no extreme increase in resistance on the Al foil surface was observed on the reduction side, suggesting that the passive film does not become thicker. However, when a high concentration electrolyte solution (for example, high concentration electrolyte solution at a concentration of 4 mol/kg or more) was used, it is considered that a passive film sufficient to suppress elution of Al ions was formed in the equilibrium state during potential application, because P₂O₇ ions were present in sufficient activity during elution of Al ions.

### 6. Examination of Metal Species

The same electrochemical cell as above was formed using a Ti foil, a Ni foil, a Sn foil, a Cu foil, a Zn foil, a Pt foil or a W foil in place of the Al foil and using a 5 mol/kg K₄P₂O₇ aqueous solution as the aqueous electrolyte solution, and then evaluated under the same constant current conditions as above (above conditions 1-1 or 1-2). The results are shown in Table 1 below.

**TABLE 1**

| Working electrode | Potential @ each j (V vs. Ag/AgCl) | | | | | | | | | | | |
|---|---|---|---|---|---|---|---|---|---|---|---|---|
| | Reduction side (mA/cm²) | | | | | | Oxidation side (mA/cm²) | | | | | |
| | OCP | -0.1 | -0.1 | -0.2 | -0.3 | -0.5 | OCP | 0.1 | 0.1 | 0.2 | 0.3 | 0.5 |
| Al | -1.33 | -1.50 | -1.47 | -1.48 | -1.49 | -1.49 | -1.30 | 3.75 | 5.18 | 6.42 | 7.21 | 9.68 |
| Ti | -0.25 | -1.56 | -1.60 | -1.63 | -1.60 | -1.58 | -0.24 | 2.19 | 4.36 | 5.50 | 6.31 | 7.42 |
| Ni | -0.27 | -1.23 | -1.25 | -1.31 | -1.35 | -1.40 | -0.25 | 0.96 | 0.97 | 1.04 | 1.09 | 1.16 |
| Sn | -0.97 | -1.80 | -1.83 | -1.87 | -1.90 | -1.97 | -0.97 | -0.92 | -0.91 | - | - | - |
| Cu | -0.39 | -1.48 | -1.49 | -1.52 | -1.52 | -1.53 | -0.37 | -0.25 | -0.25 | -0.21 | -0.19 | -0.15 |
| Zn | -1.38 | -1.74 | -1.75 | -1.79 | -1.82 | -1.85 | -1.36 | -1.29 | -1.30 | -1.29 | -1.28 | -1.26 |
| Pt | -0.22 | -1.20 | -1.22 | -1.29 | -1.35 | -1.41 | -0.20 | 1.41 | 1.43 | 1.53 | 1.60 | 1.69 |
| W | -0.48 | -1.40 | -1.41 | -1.45 | -1.46 | -1.48 | -0.50 | -0.24 | -0.23 | -0.19 | -0.17 | -0.13 |

As is apparent from the results shown in Table 1, only the Ti foil showed a sharp increase in electrode resistance due to passivation, similar to the Al foil. A Ni foil and a Pt foil are known to be stable in aqueous solution systems with a pH higher than acidic, even when they are at oxidation side potential, and shows ordinary current-potential relationship. In contrast, for a Sn foil, a Cu foil, a Zn foil and a W foil, which are known to be unstable at the oxidizing potential, unlike an Al foil, elution of metal ions continued to progress even in a 5 mol/kg K₄P₂O₇ aqueous electrolyte solution. This revealed that if the solubility of the eluted metal ion and the P₂O₇ compound coordinated thereto is not low, the elution reaction cannot be stopped because a passive film is not formed by the adhesion and deposition of the compound. Namely, the elution suppression effect of the metallic foil by the passivation film can be said to be significantly exhibited when a metallic foil containing Al is used.

### 7. Evaluation Assuming Aqueous Potassium Ion Battery

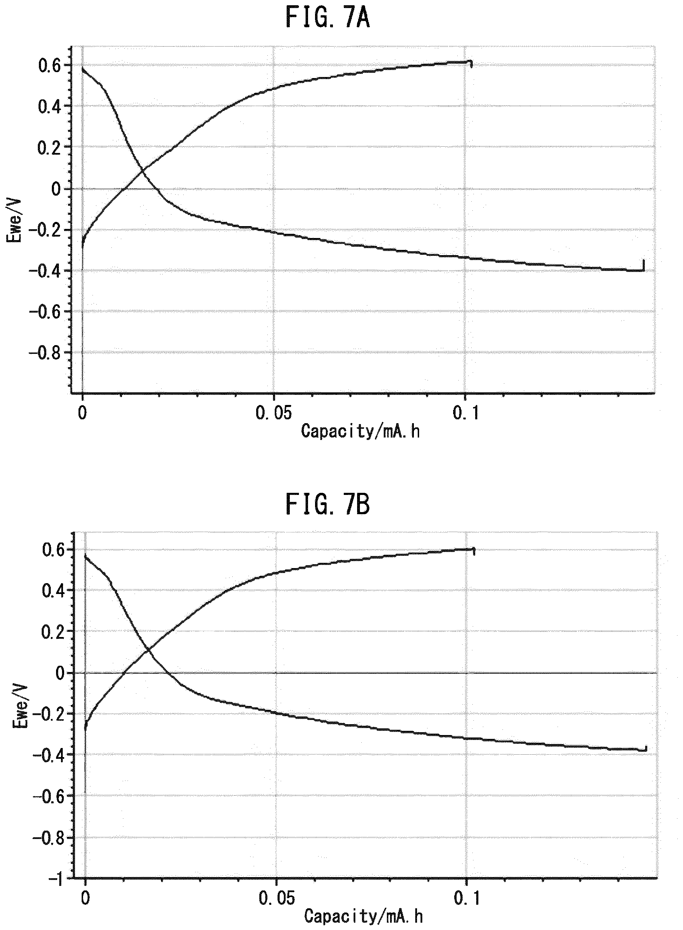

A 5 mol/kg K₂P₂O₇ aqueous solution was prepared as the aqueous electrolyte solution. An Al foil or a Ni foil was prepared as a positive electrode current collector. Spinel-type Li-Mn oxide (LiMn₂O₄, a part of Li can be replaced by K by ion exchange during charging and discharging) as a positive electrode active material, acetylene black as a conductive aid, and PVDF and CMC as binders were mixed with each other in a mass ratio of 85:10:4.5:0.5. to fabricate a positive electrode active material mixture. Using a doctor blade, the positive electrode active material mixture was uniformly applied to the surface of the Al foil or Ni foil and then dried to obtain a positive electrode for evaluation. Namely, the positive electrode is that in which a positive electrode active material layer containing a positive electrode active material and etc. is formed on the surface of the Al foil or Ni foil as a positive electrode current collector. In an electrochemical cell (VM4, manufactured by EC FRONTIER CO., LTD), the above positive electrode was used as the working electrode, the above aqueous electrolyte solution was used as the electrolyte solution, Pt mesh was used as the counter electrode, and Ag/AgCl was used as the reference electrode to fabricate an evaluation cell. The evaluation cell thus formed was charged and discharged at 0.1 mA for 1 hour for charging and at -0.1 mA for discharging under the conditions of a cut potential of -0.4 V vs. Ag/AgCl, thus obtaining a charge-discharge curve. The results are shown in FIG. 7A and FIG. 7B. FIG. 7A shows the results obtained using the Al foil and FIG. 7B shows the results obtained using the Ni foil. As is apparent from the results shown in FIG. 7A and FIG. 7B, there was no difference at all in the charge-discharge results of the LiMn₂O₄ electrode between the case of using the Al foil which forms a passive film, and the case of using the Ni foil which does not form a passive film but is insoluble. This revealed that sufficient conductivity is ensured between the active material and the Al foil when charging/discharging is performed after coating and forming the electrode, and that passive film is difficult to form between the solid and the solid, such as between the active material and the Al foil. Namely, in the aqueous potassium ion battery, it is considered that the adverse effect due to formation of the passive film is not substantially exerted.

### 8. Summary

As is apparent from above results, when an aqueous electrolyte solution containing K₂P₂O₇ is used as the electrolyte, it is possible to perform charging and discharge of the active material while suppressing elution of Al foil at the oxidation and reduction potentials if the concentration of K₂P₂O₇ is as high as 4 mol/kg or more. Namely, it is possible for an aqueous potassium ion battery including a positive electrode, an aqueous electrolyte solution and a negative electrode, wherein one or both of the positive and negative electrodes has/have a current collector containing Al, the current collector is in contact with the aqueous electrolyte solution, and the aqueous electrolyte solution contains water and potassium pyrophosphate dissolved at a concentration of 4 mol/kg or more per 1 kg of the water, to suppress elution of Al from the current collector into the aqueous electrolyte solution.

### 9. Further Examination of Aqueous Electrolyte Solution

In the above, an examination was made of the case where only K₂P₂O₇ is dissolved in pure water as an electrolyte in an aqueous electrolyte solution. As a result, it has been found that when the concentration of K₂P₂O₇ is 4 mol/kg or more, elution of Al at the oxidation and reduction potentials is suppressed by the formation of a passive film on the surface of the Al foil. However, this concentration of "4 mol/kg" is not necessarily the minimum concentration required to suppress elution of Al. For example, if other electrolytes or some additives are dissolved together with K₂P₂O₇ in the aqueous electrolyte solution, there is a possibility that elution of the Al foil at the oxidation and reduction potentials can be suppressed even if the concentration of K₂P₂O₇ is less than 4 mol/kg. Namely, if two conditions below can be satisfied, elution of Al at the oxidation potential and reduction potential is considered to be suppressed even if the concentration of K₂P₂O₇ in the aqueous electrolyte solution is less than 4 mol/kg:
(1) Al ions eluted from the Al foil into the aqueous electrolyte solution interact with anions (for example, P₂O₇ ions) derived from K₂P₂O₇ and are precipitated as an insoluble compound, and
(2) The insoluble compound is precipitated in the vicinity of the Al foil and adheres to the surface of the Al foil to form a passive film (the eluted Al does not diffuse far from the Al foil via H₂O and OH⁻).

The present inventors have investigated the difference between the physical properties of the aqueous electrolyte solution in which elution of Al can be suppressed by satisfying conditions (1) and (2) and the physical properties of the aqueous electrolyte solution in which Al elution cannot be suppressed because conditions (1) and (2) are not satisfied through various tests.

### 9.1 Fabrication of Aqueous Electrolyte Solution

K₄P₂O₇ was dissolved in 1 kg of pure water to a predetermined concentration (0.5 to 7 mol) to obtain an aqueous electrolyte solution for evaluation.

### 9.2 Confirmation by DSC

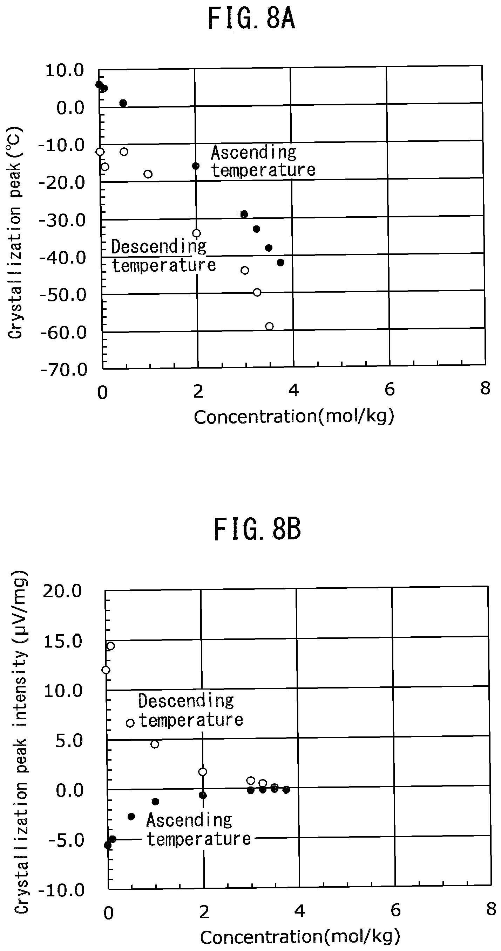

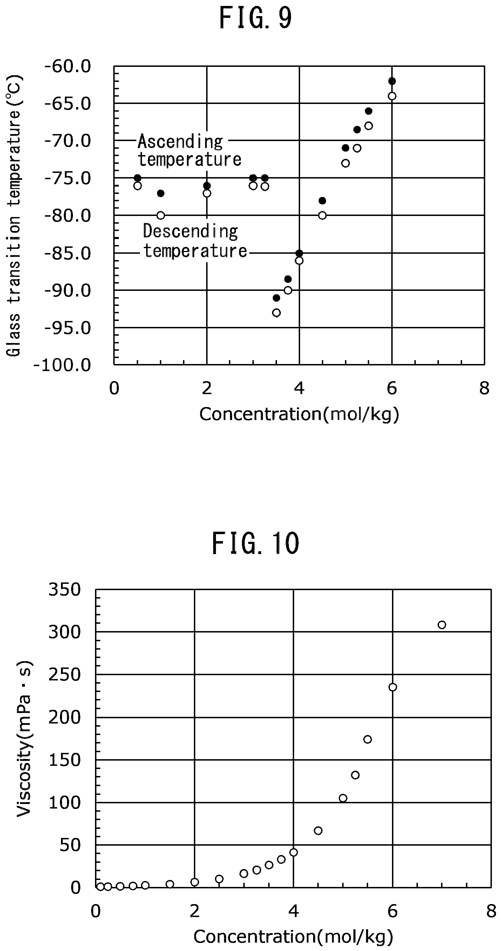

The peak crystallization temperature (freezing point temperature) and glass transition temperature of each aqueous electrolyte solution were confirmed by differential scanning calorimetry (DSC). Note that the DSC sweep rate was set at 5°C/min for both descending temperature and ascending temperature, and the sweep range was set as follows: temperature descending to -120°C from room temperature, followed by temperature ascending to 40°C. The atmosphere in DSC was an atmosphere of inert gas such as Ar, and the pressure was equal to the atmospheric pressure. However, since a sealed aluminum container was used for the evaluation, the atmosphere inside the container was the sealed atmosphere under atmospheric pressure. FIG. 8A shows the relationship between the concentration and the crystallization peak temperature (freezing point) of an aqueous electrolyte solution. FIG. 8B shows the relationship between the concentration and the crystallization peak intensity of an aqueous electrolyte solution. FIG. 9 shows the relationship between the concentration and the glass transition temperature of an aqueous electrolyte solution.

As is apparent from the results shown in FIG. 8A and FIG. 8B, when the concentration of K₄P₂O₇ in the aqueous electrolyte solution is 4 mol/kg or more, there is no crystallization peak in DSC, that is, the aqueous electrolyte solution has no freezing point at - 60°C or higher. As is apparent from the results shown in FIG. 9, the glass transition temperature changes specifically when the concentration of K₄P₂O₇ in the aqueous electrolyte solution is around 4 mol/kg.

These results suggest that when the concentration of K₄P₂O₇ in the aqueous electrolyte solution is 4 mol/kg or more, the solution structure (clusters, networks, etc.) is significantly changed due to the disappearance of interactions between H₂O molecules. For example, it is thought that H₂O molecules are surrounded by ions and aggregates (associations) derived from K₄P₂O₇, and the network derived from K₄P₂O₇ becomes stronger, and H₂O molecules can no longer form a crystallization network with each other.

In other words, if "aqueous electrolyte solution in which K₄P₂O₇ is dissolved and does not have a freezing point at -60°C or higher", it can be said that the dissolved Al can react with anions derived from K₄P₂O₇, and the network of H₂O molecules and OH⁻ required for the eluted Al to diffuse in the solution is absent, and that the above two conditions, that is:
(1) Al ions eluted from the Al foil into the aqueous electrolyte solution interact with anions (for example, P₂O₇ ions) derived from K₄P₂O₇ and are deposited as an insoluble compound; and
(2) The insoluble compound precipitates in the vicinity of the Al foil and adheres to the surface of the Al foil to form an passive film (the eluted Al does not diffuse far from the Al foil via H₂O and OH⁻)
can be satisfied. For example, even if the concentration of K₄P₂O₇ in the aqueous electrolyte solution is less than 4 mol/kg, the above conditions (1) and (2) can be satisfied by dissolving other electrolytes and additives so that "the aqueous electrolyte solution has no freezing point at - 60°C or higher", (1) and (2) above are considered to be satisfied.

### 9.3 Presence or Absence of Salt Precipitation after Cooling

Each aqueous electrolyte solution was cooled from 0°C to -60°C, and the presence of salt precipitation was checked by DSC. As a result, no peaks originating from salt precipitation were observed in any of the aqueous electrolyte solution concentrations.

Among conventional highly concentrated aqueous electrolyte solutions, there are those in which the amount of dissolvable electrolyte varies greatly depending on temperature, and salts are easily precipitated by temperature changes. For example, a highly concentrated lithium imide salt solution known as an aqueous electrolyte solution for aqueous lithium ion batteries, and a highly concentrated sodium imide salt solution known as an aqueous electrolyte solution for aqueous sodium ion batteries, precipitate salt when the temperature drops from room temperature by several degrees, and there is concern that the precipitated salt may inhibit battery reaction. In contrast, the aqueous electrolyte solution for aqueous potassium ion batteries in this example can be used in various environments as a stable electrolyte that does not freeze at extremely low temperatures and does not cause salt precipitation, as mentioned above.

### 9.4 Confirmation of Viscosity

The viscosity of each aqueous electrolyte solution at 20°C was confirmed. The viscosity was measured using a laboratory vibration viscometer (MODEL VM-10A-L, VM-10A-M, SEKONIC). FIG. 10 shows the relationship between the concentration and viscosity of the aqueous electrolyte solution. As shown in FIG. 10, viscosity increases rapidly when the concentration of K₄P₂O₇ in the aqueous electrolyte solution is 4 mol/kg or more. For example, from the viewpoint of suppressing deterioration of the ionic conductivity, the smaller the viscosity of the aqueous electrolyte solution, the better. For example, if the concentration of K₄P₂O₇ is 7 mol/kg or less, the viscosity does not increase excessively and is suitable.

### 10. Conclusion

From the above results, it can be said that when an aqueous potassium ion battery is formed, it is possible to suppress elution of Al from the current collector containing Al into the aqueous electrolyte solution at the oxidation potential and reduction potential if the aqueous electrolyte solution meets the following requirements (A) and (B).
(A) The aqueous electrolyte solution contains water and potassium pyrophosphate dissolved in the water.
(B) The aqueous electrolyte solution does not have a freezing point -60°C or higher.

### REFERENCE SIGNS LIST

10: Positive electrode
11: Positive electrode active material layer
12: Positive electrode current collector
20: Aqueous electrolyte solution
30: Negative electrode
31: Negative electrode active material layer
32: Negative electrode current collector
40: Separator
100: Aqueous potassium ion battery

## Claims

1. An aqueous potassium ion battery comprising a positive electrode, an aqueous electrolyte solution and a negative electrode, wherein
one or both of the positive electrode and the negative electrode has/have a current collector containing Al,
the current collector is in contact with the aqueous electrolyte solution,
the aqueous electrolyte solution contains water and potassium pyrophosphate dissolved in the water, and
the aqueous electrolyte solution has no freezing point at -60°C or higher.

2. The aqueous potassium ion battery according to claim 1, wherein
the aqueous electrolyte solution does not involve salt precipitation when cooling from 0°C to - 60°C.

3. The aqueous potassium ion battery according to claim 1 or 2, wherein
at least the positive electrode has the current collector.

4. The aqueous potassium ion battery according to any one of claims 1 to 3, wherein
the aqueous electrolyte solution contains water and potassium pyrophosphate dissolved at a concentration of 4 mol or more and 7 mol or less per 1 kg of the water.

5. The aqueous potassium ion battery according to any one of claims 1 to 4, wherein
the aqueous electrolyte solution has a viscosity of 40 mPa·s or more and 350 mPa·s or less at 20°C.

6. The aqueous potassium ion battery according to any one of claims 1 to 5, having a bipolar structure, wherein
a positive electrode active material layer is formed on one side of the current collector and a negative electrode active material layer is formed on the other side of the current collector.
